# EUROPEAN PATENT SPECIFICATION

(11) **EP 1 397 956 B1**
(45) Date of publication and mention of the grant of the patent: **20.12.2006**
(21) Application number: 02730316.3
(22) Date of filing: 13.05.2002
(51) Int. Cl.: A01K 1/01, A01K 1/015

(54) **SYSTEM WITH AN ADJUSTABLE MOVABLE BASE PLACED BENEATH A WIRE FLOOR USED FOR THE CONTINUOUS SEPARATION OF FAECES AND URINE OR FOR THE COMBINED HANDLING OF BOTH PRODUCTS IN PIG INSTALLATIONS**
SYSTEM MIT EINER EINSTELLBAREN BEWEGLICHEN BASIS, DIE UNTER EINEM DRAHTBODEN ANGEORDNET IST, DER ZUR KONTINUIERLICHEN TRENNUNG VON FÄKALIEN UND URIN ODER FÜR DIE KOMBINIERTE HANDHABUNG BEIDER PRODUKTE IN SCHWEINE-ANLAGEN VERWENDET WIRD
SYSTEME A FOND AMOVIBLE REGLABLE SOUS UN SOL GRILLAGE PERMETTANT DE SEPARER DE MANIERE CONTINUE LES MATIERES FECALES ET L'URINE OU DE MANIPULER CONJOINTEMENT LES DEUX DANS DES INSTALLATIONS DESTINEES AUX PORCINS

(30) Priority: 18.05.2001 ES 200101138
(43) Date of publication of application: 17.03.2004
(73) Proprietor: Empresa de Transformacion Agraria, S.A. (TRAGSA), 28006 Madrid (ES)
(72) Inventor: VAZQUEZ MINGUELA, Jesus, Ciudad Universitaria, 28040 Madrid (ES); GARCIMARTIN MOLINA, Miguel, Angel, Ciudad Uni., 28040 Madrid (ES); OVEJERO RUBIO, Ismael, Ciudad Universitaria, 28040Madrid (ES); DAZA ANDRADA, Argimiro, Ciudad Universitaria, 28040 Madrid (ES); LOPEZ HERNANDEZ, Manuel, E-28006 Madrid (ES); CALERO GIL, Rodrigo, E-28006 Madrid (ES); ONATE GARCIA-IBARROLA, Ignacio, E-28006 Madrid (ES); ORTEGA LABRANDERO, Rocio, E-28006 Madrid (ES)
(74) Representative: Irache Pereira Tona, Maria
(86) International application number: PCT/ES2002/000226
(87) International publication number: WO 2002/094011

(56) References cited:
- EP-A1- 0 749 684
- EP-A1- 0 850 561
- ES-T3- 2 101 796
- ES-T3- 2 154 081

## Description

### Object of the invention

The present invention refers to an adjustable floor conveyor system under slatted floor for continuous separation of feces and urine, or for combined handling of both products, in pigs housings, providing essential novelty features and significant advantages with regard to the means known and used for the same purposes in the current state of the art, e.g. EP-A-850561 according to the preamble of claim 1.

More specifically, the invention proposes a system capable of steplessly or intermittently carrying out different adjustments in view of obtaining, indistinctly, complete separation of feces and urine, partial separation of urine for obtaining a feces and urine mixture in suitable ratios for a pasty handling, a combined removal of feces and urine or a feces and urine removal with controlled and proportional addition of an absorbent product (for example saw dust, chopped straw, or the like).

A system designed in this manner allows being adapted to the specific conditions of the farm, such that the drawbacks of environmental pollution can be reduced, and the well-being of the animals improved with regard to the waste management solutions provided by currently existing conventional systems.

The field of application of the present invention is obviously comprised within the industrial sector dedicated to carrying out facilities for breeding and raising livestock, and especially for pigs.

### Background of the invention

It is known that environmental problems associated with pig farms are very different, and with varying importance. Livestock farms produce bad odors, generate emissions (particularly ammonia emissions) which must be controlled and, moreover, in the majority of cases, they manage the wastes by using large amounts of wash waters, which lead to the production of liquid manure (wash waters + feces + urine), dry matter (DM) concentration which normally ranges between 3 and 6%. Liquid manure thus produced can be the object of use as an organic fertilizer, but it currently so happens that either the livestock farmers do not have lands, or they have an insufficient amount of lands to absorb the amount of liquid manure produced. Liquid manure exportation to other farms is significantly hindered due to a series of factors, among which the following stand out: unpopularity of using liquid manures; the non-cost effective use of liquid manure due to its scarce nutrient concentration; the economically acceptable radius of liquid manure exportation is very limited, due to transport cost; livestock facilities tend to be concentrated, therefore, by areas, more livestock wastes are produced than that which can be assumed by the agricultural surface; not all crops accept organic fertilization in all crop years.

Therefore, the search for a natural, low-cost and minimum environmental impact (organic fertilization) solution is in obtaining maximum concentration liquid manure on the livestock farm, which requires removing the wash waters in ordinary cleaning, or solid manure, much more accepted by farmers, which can further constitute the base for elaborating a quality compost, with added value, and even exportable to very distant, deficit agricultural areas.

The known systems intended for obtaining solid manure on pig farms are the following:
- using a deep bedding in housings, and subsequent removal thereof. This system is expensive due to the cost of the large amount of absorbent material used (generally straw or saw dust), and as a result is scarcely used. Furthermore, the adding and removing tasks are cumbersome and time consuming. This system does not completely prevent the use of wash waters in ordinary cleaning, since dirt always adheres to the floor. Furthermore, between consecutive removals, the absorbent material does not completely prevent the emission of gaseous substances harmful for the animal's well-being;
- externally mixing liquid manure with straw or another type of bedding in the manure pit. This solution is easier to handle than the previous one, since the liquid manure and bedding are mixed externally. The absorbent material expense is generally higher because, by virtue of the handling system, liquid manure has more wash water and is therefore more diluted. On the other hand, this system does not limit ammonia emissions;
- under-slat scraper system, without bedding. This technique has been known for a long time, and has been rather unsuccessful on pig farms. The floor is normally slightly tilted, and allows continuously removing urine. The scrapers remove the feces at intervals. Due to its design, the separation of urine and feces is not neat, and the system always leaves a film of heavy waste on the floor. This negatively affects the well-being of the animals, and requires cleaning with wash water, which increases liquid effluent volume;
- under-slat scrapers with bedding. With this system, the neatness of urine separation increases, and the urine is even removed, as feces and urine are absorbed by the absorbent material. The heavy film on the floor decreases. The drawbacks are the high cost of the absorbent material, handling complications (manual addition of straw), and the gaseous emissions between removal periods;
- sieving the liquid manure with a mesh pore diameter of 0.52 to 1.0 mm. This technique is also very old, and allows separating two fractions: one solid fraction with 20-21% dry matter, and a liquid fraction. The liquid fraction has a high contaminating load (between 10,000 and 20,000 mg/l of Biochemical Oxygen Demand), according to the wash water volume. The solid fraction is more accepted by farmers, but its nutritive element concentration is lower than that of feces. Contemplated as an organic fertilizer, the liquid fraction has a very low concentration and, contemplated as a waste water, it has a high contaminating load, therefore suitable management thereof is difficult and expensive;
- solid/liquid separation systems based on the use of coagulants and polyelectrolytes. These systems obtain a solid fraction with 20-24% DM, but at the expense of a careful and variable regulation, which is uncomfortable, and with high economic cost due to the price of the chemicals used. The use of wash waters is not prevented, therefore volumes to treat are high. Its use on farms is practically null;
- centralized treatment plants based on the combination of several purification technologies (physicochemical treatments, anaerobe digestion, aerobe purification, lagooning). They are complex plants with a very high investment and maintenance cost. Said plants, using numerous and complex processes, obtain limited purification of the liquid fraction, and sludges which must be used as fertilizers. Said sludges are, almost in their entirety, biologically transformed feces;
- centralized drying plants, also called cogeneration plants. These plants install gas-oil or natural gas engine generators, the surplus thermal power of which dries the liquid manures. The investment cost is very high, and non-renewable fuels are used, all this for evaporating the water from the liquid manures (dry matter of which does not exceed 8%), and achieving a solid fraction which is essentially that contained in feces, and which will be immediately separated by the system of the invention, which will be object of the following description.

### Summary of the invention

The present invention has carried out the development of a system by means of which effective solutions are provided for the drawbacks currently existing in the state of the art and which have been reflected in the foregoing. Thus, versatility of the proposed system allows, with its adaptation to the specific conditions of the farm, the farmer to significantly reduce drawbacks of environmental pollution and to also noticeably improve the well-being of the animals with regard to the known conventional waste management options.

More clearly, the system provides a series of solutions, the application of which can lead to obtaining very advantageous situations, such as (a) the fact that farmers can export their wastes in solid form, and they can have a sufficient surface for removing urine by natural evaporation, or by means of controlled dilution in irrigation water; (b) in the cases in which farmers have the possibility to export solid wastes, but with limitations for management of the surplus urine, the possibility of recovering nutrients from the urine is provided, therefore the final urine volume is reduced; furthermore, immediate absorption of part of the urine by the feces causes the reduction of ammonia emissions; (c) improvement in the liquid form waste exportation expectations, since the higher nutrient concentration makes it possible to reduce fertilization cost for external farmers, as well as working time; this advantage is also very noticeable for the farmer if organic fertilization, by liquid route, is carried out on his/her lands; and (d) a very advantageous alternative is provided for those farmers who can have absorbent products at a good price, or minimum surplus urine management possibilities, or who intend to carry out quality composting on the farm itself or in association with other farmers.

As can be understood, since the conditions of the livestock farm can vary over time, versatility of the system provides farmers with a large response capacity, always considering the well-being of the animals, and minimum (even null) production of liquid effluents with no agricultural purpose, i.e. potentially contaminating. The system of the invention thus provides a solution to the different environmental drawbacks related to pig liquid manures, at the same time significantly improving the interior environment of the livestock housings by means of a technologically simple system, and which has low assembly and maintenance costs.

### Brief description of the drawings

These and other features and advantages of the invention will become more clearly evident from the following detailed description of a preferred embodiment, given only as an illustrative and non-limiting example, in reference to the attached drawings in which:
Figure 1 shows a general, schematic, side elevational view of the floor conveyor system proposed by the invention, and
Figure 2 shows upper plan and profile views of the floor conveyor of the present invention.

### Description of a preferred embodiment

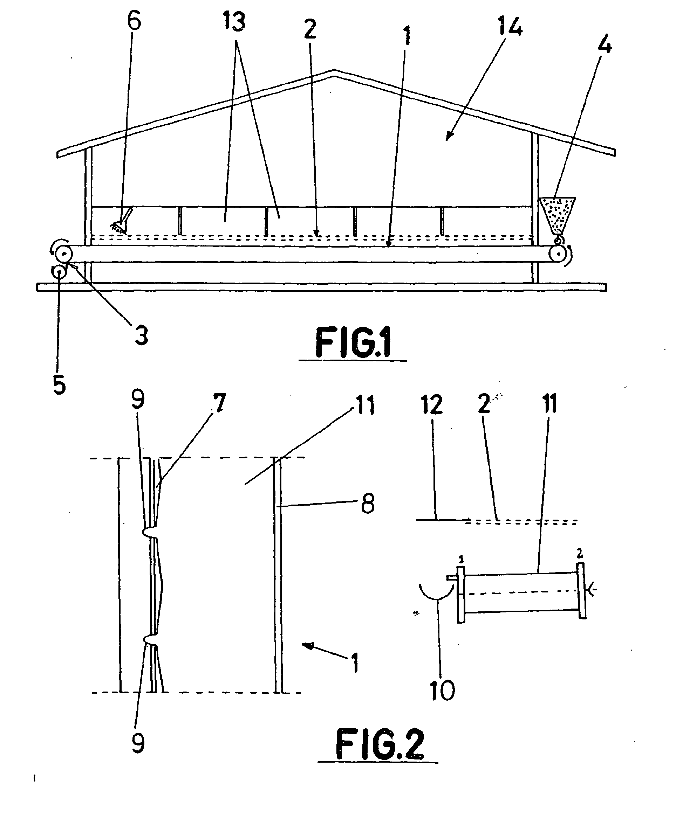

To carry out the detailed description of the preferred embodiment and embodiment alternatives thereof, permanent reference will be made to both figures of the attached drawings, through which the same numerical references are used for designating equal or similar parts. Thus, first in reference to figure 1, the schematic representation of a facility, carried out according to the system of the invention can be seen therein, generally designated with numerical reference 14, and in which a series of basic or fundamental elements can be distinguished, which elements correspond to a floor conveyor 1 which, in the preferred embodiment, has been foreseen to be materialized in a flat conveyor belt form, susceptible to independently adopting different degrees of both longitudinal and transverse slope, and optionally provided with windows and side edges (as will later be seen in relation to figure 2), which is located under a slatted (totally or partially slatted) floor 2. The arrangement of a scraper element 3 has been provided in a predetermined position, preferably close to one of the ends of the belt 1, in contact with the belt surface and intended for the cleaning thereof.

Complementarily to said basic elements, the invention has provided the placement of an absorbent material metering device 4, arranged in correspondence with the first end of the conveyor belt 1, which metering device includes a deposit or hopper for holding the absorbent material, and mechanical means for variable metering of different products; a feces, or alternatively, feces plus urine, or also alternatively, feces plus absorbent material plus urine conveyor-mixer device 5, located in a position corresponding to the opposite end of the conveyor belt 1, preferably constructed as a worm wheel, and its operation being susceptible to synchronization with that of the conveyor belt 1; and a device 6, constituted of a stall floor cleaning system by means of the use of compressed air.

Figure 2 shows two schematic upper plan and cross-profile views, respectively, of the means described in relation to figure 1. Based on said figure, it can be seen that the belt 1, susceptible to longitudinal and/or transverse slope, has a flat surface 11 longitudinally defined by a raised continuous edge 8, having a constant section, whereas the opposite, also raised, edge constitutes the urine discharge side, and has a variable section, urine discharge flaps 9 having been formed thereon, in correspondence with which flaps, windows have been formed by means of recesses or openings on the edge 7, uniformly distributed along its length, separated by a distance which can range within a predetermined interval. Said urine discharge flaps 9 shift with the motion of the belt 1 above a urine collection and evacuation channel 10, said channel being covered on the upper portion by means of a cover 12 placed at the same level as the totally or partially slatted floor 2.

As can be understood, the use of the basic components with one or more of the complementary devices, allows proposing a very broad series of handling combinations, by means of which the objectives of the invention, mainly the improvement of the well-being of the animals and the greatest possible reduction of liquid effluents, can be carried out. Therefore, in a first operation alternative, belt 1 provided with edges 7, 8 and open windows, occupies a tilted position with a minimum longitudinal and transverse slope; under these conditions, complete separation of the feces and urine is achieved, taking advantage of the adherence and scarce rolling capacity of solid excrements, and the runoff of the liquids through the flaps 9, to the evacuation channel 10.

In a second operation alternative, the belt is in a completely horizontal position (i.e. null longitudinal and transverse slope), and the windows are closed; with this, feces and urine are conveyed together, by means of the conveyor belt 1, to the outside of the facility, thus obtaining concentrated liquid manure.

In a third operation alternative, the belt 1 with edges 7, 8 and open windows is arranged such that it has a minimum transverse and medium longitudinal slope, the feces or feces plus urine, or feces plus absorbent plus urine conveyor-mixer device 5, as indicated in the foregoing, being present. Under these conditions, the system permits partial separation of urine due to the modifications of its trajectory with regard to the first option disclosed and, consequently, obtainment of the pasty manure (feces plus part of the urine) in said conveyor-mixer device 5.

Lastly, the fourth alternative option corresponds to a system in which the hopper and absorbent material metering device 4 and the conveyor-mixer device 5 are present, and the belt 1 is provided with edges 7, 8 and open windows. In this case, absorption of urine by the absorbent material supplied to said belt 1 from device 4 is possible, this absorption being more or less complete according to the amount of absorbent material used and belt slope variations. The urine, feces and absorbent material mixture is obviously carried out in device 5.

According to the preferred embodiment of the invention, device 4, intended for optionally providing absorbent material, comprises a fixed hopper, on the bottom of which a metering means, depending on the chosen absorbent material, is arranged, constituted of a grooved cylinder, or a gear wheel or a floor conveyor. This type of metering devices are adaptations of systems already existing in machines such as fertilizing and seeding machines, which require a specific, non-substantial design for each type of absorbent, and taking into account the maximum and minimum doses to be applied. The operation of any of these metering devices is carried out by means of a drive wheel (not shown) in permanent contact with the under-slat floor conveyor (SFC in the forthcoming). Thus, automatic addition is carried out during the SFC operation conditions. The mechanical connection between the drive wheel and metering device consists of a stepless speed control of the type used in seeding and fertilizing machines. The drive wheel will be kept in contact with the floor conveyor 1 by means of the action of an adjustable length spring (not shown). The metering devices are interchangeable for the purpose of foreseeing the change of absorbent material.

According to the invention, the facility in which the proposed system is assembled has predetermined design features so that the proposed objectives can be reached. For this purpose, the slat 2 is configured such that it is uncomfortable for the animals, for the purpose of preventing them from resting thereon. Therefore, the slat 2 can include specific protruding projections, bothersome for the animals. On the other hand, each compartment 13 (figure 1) is dimensioned for a number of animals, with perfectly differentiated rest and excrement areas, the rest area having a slight slope towards the slat. For the daily cleaning with compressed air, the device 6 can be movable or, where applicable, it can consist of outlets placed at regular intervals throughout the entire facility, being possible, if necessary; to carry out additional controlled cleaning with water for predetermined time periods. Furthermore, the invention has provided that the facility 14 be of the prefabricated modular type, designed for groups of a specific number of fattening animals. Lastly, the slats 2 are of a removable type so that the floor conveyor 1 can be comfortably accessed.

The conveyor belt 1 constituting the floor conveyor will be of the type constructed on the bases of rubber or flexible materials complying with the function of allowing adherence of feces and resisting the aggression of the excrements. The outer surface 11 could eventually have slight ribs or different shallow, superficial designs for aiding in achieving some of the objectives proposed by the system.

As a whole, the SFC is preferably formed by three different parts, namely the belt itself, together with its guiding and drive systems; the frame serving as a support to the previous elements, and a lower frame with adjustable coupling to the aforementioned, for independently adjusting the longitudinal and transverse slope. Both adjustments are preferably carried out from outside the facility 14. The floor conveyor 1 is placed under the slat 2, it being removable for inspection and eventual repair thereof as a result of the use of support wheels sliding on a specific rail. The facility construction 14 also has a side service area which allows removing the belts for inspection and maintenance thereof. The floor conveyor wheels are preferably rigid.

As can be understood, some of the different manners of using the system of the invention can make it necessary to not use the windows facing the flaps 9. Therefore, the invention has provided for the use of inverted "U"-shaped parts, not shown, in a complementary manner with said windows, built with a rubber material having natural flexibility or with a similar material, by means of which the hermetic seal of said windows is obtained. The raised edges 7,8 of the belt provide means for retaining and accumulating a certain amount of excrements in cases of externally repairable breakdown when the horizontal belt system is used without windows.

In the case of said figure 2, the adjustable scraper is associated to a channel 10 in which a worm wheel conveyor-mixer device is located. This solution should not be interpreted as limiting, since it only constitutes one of the possible embodiment options. In effect, cleaning action of the belt 1 by means of the application of the scraper can be carried out, discharging the material to said conveyor-mixer 5 on the inside of the channel 10, or to the concentrated manure trough, to other belts, or even to the floor itself.

The urine routing, constituted of said channel 10, has been provided with a slight slope for the purpose of allowing continuous evacuation of said urine, and is susceptible to inspection by virtue of the collaboration, on its upper portion, of handhole covers 12, made of a light, human weight resistant material (for example, porous concrete, steel plates, plastic material plates or other similar materials). Thus, cleaning and inspection operations are allowed. The evacuated urine can be routed, by gravity or by means of pumping, to any of the provided systems: concentrated liquid manure trough, evaporation or irrigation pond, manure pit, etc.

In terms of structure of the two frames of the belt to which reference was previously made, it is very similar to that of conventional belts, except in reference to the use of the so called "split frame". The structure is a light-weight type, and the sides of the frames are of the lattice truss type for preventing the occurrence of excessive deformations which would be transmitted to the belt.

To ensure regular absorption of part of the urine by the feces, where applicable, these products are discharged to a worm wheel conveyor-mixer 5, slightly tilted in a direction opposite that of the conveying, built such that the worm can be easily exchanged, driven by means of an electric motor, the mechanical motor-worm transmission being adjustable for the purpose of adjusting the conveying speed to the obtainment of an intense mixture of feces and urine, in turn preventing the accumulation of material.

Lastly, according to another optional feature of the system of the invention, the use of a manure pit has been foreseen, provided with the collection of lixiviates which are intended for the same treatment system the urine undergoes.

It is not considered necessary to amplify the content of this description so that a person skilled in the art can understand its scope and the advantages derived from the invention, as well as to develop and carry out in practice the object thereof.

However, it must be understood that the invention has been described according to a preferred embodiment thereof, therefore it can be susceptible to modifications without this implying any alteration of the basis of said invention, said modifications being able to affect the shape, size and/or manufacturing materials.

## Claims

1. An adjustable floor conveyor under a slatted floor for continuous separation of feces and urine, or for combined handling of both products, in pig facilities, by means of which it is possible to simply carry out feces and urine handling, as needed, for the complete separation of feces and urine, partial separation of urine to obtain a pasty product, combined removal of feces and urine, and the removal of feces and urine with controlled addition and providing an absorbent material such as saw dust, chopped straw or the like, and by means of which it is possible to significantly reduce environmental pollution and improve the well-being of the animals, **characterized in that** it comprises, as basic or fundamental elements, a floor conveyor (1) consisting of a conveyor belt or the like, a totally or partially slatted floor (2), and a scraper element (3) for cleaning said belt (1), and **in that** it further comprises, as complementary and/or optional elements, an absorbent material metering device (4), a feces, or feces plus urine, or feces plus absorbent material plus urine conveyor-mixer device (5), and a cleaning device (6) for cleaning the floor of the stalls (13) by means of the application of compressed air.

2. A system according to claim 1, **characterized in that** in a preferred alternative embodiment, the conveyor belt (1) is provided with a flat outer surface (11), defined by side edges (7, 8) protruding from said surface (11), and from which edges, one edge (7) is provided with windows, uniformly distributed along said edge, in correspondence with which windows, flaps (9) have been formed which, during shifting thereof, pass above a urine evacuation channel (10).

3. A system according to claim 1, **characterized in that** said metering device (4) is located in a position corresponding to a first end of the conveyor belt and includes a hopper and mechanical elements for variable metering according to the absorbent materials used, its operation being synchronized with that of said conveyor belt (1).

4. A system according to claim 1, **characterized in that** the feces, or feces plus urine, or feces plus absorbent material plus urine conveyor-mixer device (5) is located in correspondence with the second end of the conveyor belt (1), and has an operation synchronized with that of said belt (1).

5. A system according to claim 1, **characterized in that** the cleaning device (6) for cleaning by means of compressed air can indistinctly consist of a movable device or an assembly of compressed air outlets associated to the different stalls (13).

## Patentansprüche

1. Regulierbarer, beweglicher Boden unter einem Rostboden für die kontinuierliche Trennung von Fäkalien und Urin, oder für die kombinierte Behandlung beider Produkte, in Schweinfabriken, wobei er auf einfache Weise, die Verarbeitung von Fäkalien und Urin, je nach Zweck, für die komplette Trennung von Fäkalien und Urin, für die partielle Trennung von Urin um ein teigiges Produkt zu erhalten, für die kombinierte Extraktion der Fäkalien und des Urins und die Extraktion der Fäkalien und des Urins mit kontrollierter Beimengung und Zufügung eines absorbierendes Material wie Sägemehl, gehacktem Stroh oder ähnlichem erlaubt, und wobei es möglich ist, die Umweltbelastung signifikant zu reduzieren und das Wohlbefinden der Tiere zu verbessern, **dadurch gekennzeichnet, dass** er als wesentliche und grundlegende Elemente einen beweglichen Boden (1), bestehend aus einem Transportband oder ähnlichem, ein Boden (2), der entweder komplett oder teilweise als Rostboden ausgeführt ist, und ein Abstreiferelement (3) für die Reinigung des genannten Bandes (1) umfasst, und dass es zudem, als komplementäre und/oder optionale Elemente, eine Vorrichtung (4) für die Dosierung eines absorbierenden Materiales, eine Vorrichtung (5) zum Transport und Mischen der Fäkalien, oder der Fäkalien und des Urins, oder der Fäkalien und des absorbierenden Materials und des Urins, und eine Reinigungsvorrichtung (6) für die Reinigung der Boxenböden (13) unter Verwendung von Pressluft umfasst.

2. System nach Anspruch 1, **dadurch gekennzeichnet, dass** in einer alternativen bevorzugten Ausführung das Transportband (1) mit einer externer, flacher Oberfläche (11) vorgesehen ist, abgegrenzt durch seitliche Ränder (7, 8) die gegenüber der genannten Oberfläche (11) herausragen, und Ränder wovon ein Rand (7) mit Fenstern ausgestattet ist, die gleichförmig entlang des genannten Randes verteilt sind, entsprechend denen Laschen (9) ausgeführt werden, die sich während der Verschiebung über einen Urinentsorgungskanal (10) bewegen.

3. System nach Anspruch 1, **dadurch gekennzeichnet, dass** sich die genannte Dosierungsvorrichtung (4) in einer Position entsprechend eines ersten Endes des Transportbandes befindet und einen Trichter sowie mechanische Elemente für eine regulierbare Dosierung gemäß den benützten, absorbierenden Materialien umfasst, wobei die Bedienung mit dem genannten Transportband (1) synchronisiert ist.

4. System nach Anspruch 1, **dadurch gekennzeichnet, dass** sich die Vorrichtung (5) zum Transport und Mischen der Fäkalien, oder der Fäkalien und des Urins, oder der Fäkalien und des absorbierenden Materiales und des Urins entsprechend dem zweiten Ende des Transportbandes (1) befindet und eine mit dem genannten Transportband (1) synchronisierte Bedienung (1) vorweist.

5. System nach Anspruch (1), **dadurch gekennzeichnet, dass** die Reinigungsvorrichtung (6) für die Reinigung unter Verwendung von Pressluft eine bewegliche Vorrichtung oder eine Anordnung aus Pressluftaustritten die den verschiedenen Boxen (13) zugeordnet sind, umfassen kann.

## Revendications

1. Fond mouvant réglable sous un plancher latté pour la séparation continue de selles et de l'urine, ou pour la manipulation combinée des deux produits, dans des installations de porcin, au moyen duquel il est possible de réaliser, de manière simple, la manipulation des selles et de l'urine, selon il convienne, pour la séparation complète des selles et de l'urine, la séparation partielle de l'urine pour obtenir un produit pâteux, l'extraction combinée des selles et de l'urine, et l'extraction de selles et de l'urine avec adition contrôlée et en fournissant une matière absorbante du type sciure, paille hachée ou analogues, et au moyen duquel il est possible de réduire significativement la contamination environnementale et améliorer le bien-être des animaux, **caractérisé en ce qu'**il comprend, comme éléments de base ou fondamentaux, un fond mouvant (1) consistant en une bande transporteuse ou analogue, un plancher (2) latté totalement ou partiellement, et un élément gratteur (3) pour le nettoyage de ladite bande (1), et **en ce qu'**il comprend en outre, comme éléments complémentaires et/ou optionnels, un dispositif (4) de dosage d'une matière absorbante, un dispositif (5) transporteur-mélangeur de selles, ou de selles plus de l'urine, o de selles plus de la matière absorbante plus de l'urine, et un dispositif (6) de nettoyage pour le nettoyage du sol des stalles (13) au moyen de l'application d'air sous pression.

2. Système selon la revendication 1, **caractérisé en ce que** dans une mise en oeuvre alternative préférée, la bande transporteuse (1) est prévue d'une surface (11) externe plate, délimitée par des bords (7, 8) latéraux émergeants par rapport à ladite surface (11), et à partir desdits bords, un bord (7) est prévu des fenêtres, distribuées uniformément le long dudit bord, en correspondance avec lesdites fenêtres on a formé des oreilles (9) qui passent, lors de leur déplacement, par-dessus un canal (10) d'évacuation d'urine.

3. Système selon la revendication 1, **caractérisé en ce que** ledit dispositif (4) de dosage se trouve situé dans une position correspondante à une première extrémité de la bande transporteuse, et il inclut une trémie et des éléments mécaniques de dosage variable selon les matières absorbantes utilisées, son actionnement étant synchronisé avec celui de la bande transporteuse (1).

4. Système selon la revendication 1, **caractérisé en ce que** le dispositif (5) transporteur-mélangeur de selles, ou de selles plus de l'urine, ou de selles plus de la matière absorbante plus de l'urine, se trouve situé en correspondance avec la deuxième extrémité de la bande transporteuse (1), et il présente un fonctionnement synchronisé avec ladite bande (1).

5. Système selon la revendication (1), **caractérisé en ce que** le dispositif (6) de nettoyage pour le nettoyage au moyen d'air sous pression peut consister, indistinctement, en un dispositif mobile ou en un montage de sorties d'air sous pression associées aux différents stalles (13).
